# EUROPEAN PATENT APPLICATION

(11) **EP 4 660 799 A1**
(43) Date of publication of application: **10.12.2025**
(21) Application number: 23922280.5
(22) Date of filing: 31.08.2023
(51) Int. Cl.: G06F 9/455

(54) **LIVE MIGRATION METHOD FOR CONTAINER, AND PROCESSOR, HOST, CHIP AND INTERFACE CARD**

(30) Priority: 16.02.2023 CN 202310152806
(71) Applicant: Huawei Technologies Co., Ltd., Shenzhen, Guangdong 518129 (CN)
(72) Inventor: WANG, Qian, Shenzhen, Guangdong 518129 (CN); CHEN, Xiao, Shenzhen, Guangdong 518129 (CN); WANG, Xianhong, Shenzhen, Guangdong 518129 (CN); LUO, Jian, Shenzhen, Guangdong 518129 (CN); LIU, Yanbo, Shenzhen, Guangdong 518129 (CN)
(74) Representative: Pfenning, Meinig & Partner mbB
(86) International application number: PCT/CN2023/116050
(87) International publication number: WO 2024/169157

(57) **Abstract**

This application discloses a container live migration method, a processor, a host, a chip, and an interface card. In this application, because data of a container is obtained from a memory of a source host through DMA, and the data of the container is transmitted to a target host instead of using a CPU, the CPU of the source host does not need to perform, in a live migration process, an operation of transmitting the data of the container. Therefore, live migration offloading is implemented, resources consumed by the CPU are saved, the container live migration process is accelerated, efficiency of the CPU of the host is improved, and impact of container migration on another service on the host is also reduced.

## Description

This application claims priority to Chinese Patent Application No. 202310152806.1, filed with the China National Intellectual Property Administration on February 16, 2023 and entitled "CONTAINER LIVE MIGRATION METHOD, PROCESSOR, HOST, CHIP, AND INTERFACE CARD", which is incorporated herein by reference in its entirety.

### TECHNICAL FIELD

This application relates to the field of computer technologies, and specifically, to a container live migration method, a processor, a host, a chip, and an interface card.

### BACKGROUND

Container live migration is also referred to as container dynamic migration or container real-time migration, and refers to moving a container from a host to another host without interrupting a device. In a related technology, a central processing unit (CPU) of a source host transmits all data of a to-be-migrated container in a memory to a target host. A CPU of the target host receives the data of the container, and restores a state of the container based on the data of the container.

When the foregoing method is used to migrate a container, a CPU of a host consumes excessive resources.

### SUMMARY

This application provides a container live migration method, a processor, a host, a chip, and an interface card, to save resources consumed by a CPU of the host in a container migration process. Technical solutions are as follows:
According to a first aspect, a container live migration method is provided. The method includes: A first processor obtains first data of a to-be-migrated container from a memory of a first host through direct memory access (DMA), where the first host includes the memory, a central processing unit CPU, and the first processor, and the container runs on the first host; and the first processor sends the first data to a second host.

Because a processor participates in a container live migration process, the processor obtains data of a container from a memory of a source host through DMA, and transmits, in place of a CPU, the data of the container to a target host, so that the CPU of the source host does not need to perform, in the live migration process, an operation of transmitting the data of the container. Therefore, processor-based live migration offloading is implemented, resources consumed by the CPU are saved, the container live migration process is accelerated, efficiency of the CPU of the host is improved, and impact of container migration on another service on the host is also reduced.

In some implementations, that the first processor sends the first data to the second host includes: The first processor sends the first data to a second processor in the second host via a first network, where the first network is a communication network between the first processor and the second processor.

Because the data of the container is transmitted via a private network interconnected between the processors, a transmission speed of the data of the container is increased, and container live migration is further accelerated.

In some implementations, the first processor is further configured to communicate with a storage device connected to the first host, and allocate persistent storage space to the container from the storage device.

In the foregoing implementations, the data of the container not only can be stored by using the memory, but also can be stored by using the storage device connected to the host, thereby further expanding available storage space of the container.

In some implementations, that the first processor sends the first data to the second host includes: The first processor sends the first data to a memory of the second host through remote direct memory access RDMA.

Because the data of the container is sent to a memory of a target host through RDMA, a CPU of the target host does not need to participate in a process of transmitting the data of the container, thereby further accelerating container live migration.

In some implementations, the method further includes: The first processor obtains second data of the container from the memory of the first host through DMA, where the second data is data modified by the container in the memory of the first host in a process in which the first data is transmitted to the second host; and the first processor sends the second data to the second host.

In some implementations, the method further includes: In response to creation of the container, the first processor allocates first storage space to the container from storage space included in the first processor, where the first storage space is used to store the data of the container.

In some implementations, the method further includes: In response to an available capacity of the memory of the first host reaching a threshold, the first processor migrates, through DMA, the data of the container in the memory of the first host to the first storage space included in the first processor.

In some implementations, the method further includes: The first processor receives a data obtaining request from the container, where the data obtaining request indicates to obtain third data; and the first processor obtains the third data, and writes the third data into the memory of the first host through DMA.

In some implementations, that the first processor obtains the first data of the to-be-migrated container from the memory of the first host through direct memory access DMA includes: The first processor obtains a storage address of the first data in the memory of the first host; and the first processor accesses the memory of the first host based on the storage address through DMA, to obtain the first data.

In some implementations, the first processor is a data processing unit DPU.

According to a second aspect, a container live migration method is provided, and is applied to a first host. The first host includes a central processing unit CPU, a memory, and a first processor, and the method includes: The first processor receives first data of a container that is sent by a second host; the first processor writes the first data into the memory of the first host through direct memory access DMA; the CPU obtains the first data from the memory of the first host; and the CPU restores a state of the container based on the first data.

In some implementations, the second host includes a second processor, and that the first processor receives the first data of the container that is sent by the second host includes: The first processor receives, via a first network, the first data of the container that is sent by the second host, where the first network is a communication network between the first processor and the second processor.

In some implementations, the first processor is further configured to communicate with a storage device connected to the first host, and allocate persistent storage space to the container from the storage device.

In some implementations, after the first processor receives the first data of the container that is sent by the second host, the method further includes: The first processor receives second data of the container that is sent by the second host, where the second data is data modified by the container in a memory of the second host in a process in which the first data is transmitted to the first host; the first processor writes the second data into the memory of the first host through DMA; the CPU obtains the second data from the memory of the first host; and the CPU updates the state of the container based on the second data.

In some implementations, the first processor is a data processing unit DPU.

According to a third aspect, a processor is provided. The processor is a first processor and includes:
a processing module, configured to obtain first data of a to-be-migrated container from a memory of a first host through DMA, where the first host includes the memory, a central processing unit CPU, and the first processor, and the container runs on the first host; and
a sending module, configured to send the first data to a second host.

In some implementations, the sending module is configured to send the first data to a second processor in the second host via a first network, where the first network is a communication network between the first processor and the second processor.

In some implementations, the processing module is further configured to communicate with a storage device connected to the first host, and allocate persistent storage space to the container from the storage device.

In some implementations, the sending module is configured to send the first data to a memory of the second host through RDMA.

In some implementations, the processing module is further configured to obtain second data of the container from the memory of the first host through DMA, where the second data is data modified by the container in the memory of the first host in a process in which the first data is transmitted to the second host.

The sending module is further configured to send, by the first processor, the second data to the second host.

In some implementations, the processing module is further configured to: in response to creation of the container, allocate, by the first processor, first storage space to the container from storage space included in the first processor, where the first storage space is used to store the data of the container.

In some implementations, the processing module is further configured to: in response to an available capacity of the memory of the first host reaching a threshold, migrate, through DMA, the data of the container in the memory of the first host to a memory connected to the first processor.

In some implementations, the processor further includes a receiving module, configured to receive, by the first processor, a data obtaining request from the container, where the data obtaining request indicates to obtain third data.

The processing module is further configured to obtain the third data, and write the third data into the memory of the first host through DMA.

In some implementations, the processing module is configured to obtain a storage address of the first data in the memory of the first host, and access the memory of the first host based on the storage address through DMA, to obtain the first data.

In some implementations, the processor is a data processing unit DPU.

In some implementations, the processing module and the sending module are implemented by using software, and the processing module and the sending module in the processor are program modules. In some other implementations, the processing module and the sending module are implemented by using hardware or firmware. For specific details of the processor provided in the third aspect, refer to any one of the first aspect or the optional implementations of the first aspect. Details are not described herein again.

According to a fourth aspect, a host is provided. The host is a first host, and the first host includes a CPU, a memory, and a first processor.

The first processor is configured to receive first data of a container that is sent by a second host;
the first processor is further configured to write the first data into the memory of the first host through direct memory access DMA;
the CPU is configured to obtain the first data from the memory of the first host; and
the CPU is further configured to restore a state of the container based on the first data.

In some implementations, the second host includes a second processor, and the first processor is configured to receive, via a first network, the first data of the container that is sent by the second host, where the first network is a communication network between the first processor and the second processor.

In some implementations, the first processor is further configured to communicate with a storage device connected to the first host, and allocate persistent storage space to the container from the storage device.

In some implementations, the first processor is further configured to receive second data of the container that is sent by the second host, where the second data is data modified by the container in a memory of the second host in a process in which the first data is transmitted to the first host; and write the second data into the memory of the first host through DMA.

The CPU is further configured to obtain the second data from the memory of the first host, and update the state of the container based on the second data.

In some implementations, the first processor is a data processing unit DPU.

According to a fifth aspect, a chip is provided, and includes a processor and a network interface.

The processor is configured to obtain first data of a to-be-migrated container from a memory of a first host through direct memory access DMA; and
the network interface is configured to send the first data to a second host.

The processor and the network interface cooperate with each other, and are configured to implement the method provided in any one of the first aspect or the optional implementations of the first aspect, or configured to implement steps performed by the first processor in the method provided in any one of the second aspect or the optional implementations of the second aspect.

According to a sixth aspect, an interface card is provided, and includes a printed circuit board, an interface, and a processor. The interface card communicates with a first host through the interface, the interface and the processor are located on the printed circuit board, and the processor is configured to obtain first data of a to-be-migrated container from a memory of the first host through direct memory access DMA; and send the first data to a second host.

The processor in the interface card may be configured to implement the method provided in any one of the first aspect or the optional implementations of the first aspect, or configured to implement steps performed by the first processor in the method provided in any one of the second aspect or the optional implementations of the second aspect.

In this application, combinations may be further made based on the implementations provided in the foregoing aspects, to provide more implementations.

### BRIEF DESCRIPTION OF DRAWINGS

FIG. 1 is a diagram of an architecture of a container live migration system according to an embodiment of this application;
FIG. 2 is a flowchart of a container live migration method according to an embodiment of this application;
FIG. 3 is a flowchart of a container live migration method according to an embodiment of this application;
FIG. 4 is a flowchart of processing a page fault according to an embodiment of this application;
FIG. 5 is a diagram of a structure of a chip 500 according to an embodiment of this application; and
FIG. 6 is a diagram of an interface card according to an embodiment of this application.

### DESCRIPTION OF EMBODIMENTS

To make the foregoing objectives, characteristics, and advantages of this application clearer and easier to understand, the following further describes embodiments of this application in more detail with reference to accompanying drawings and specific implementations.

The following describes, by using an example, a system architecture on which embodiments of this application are based.

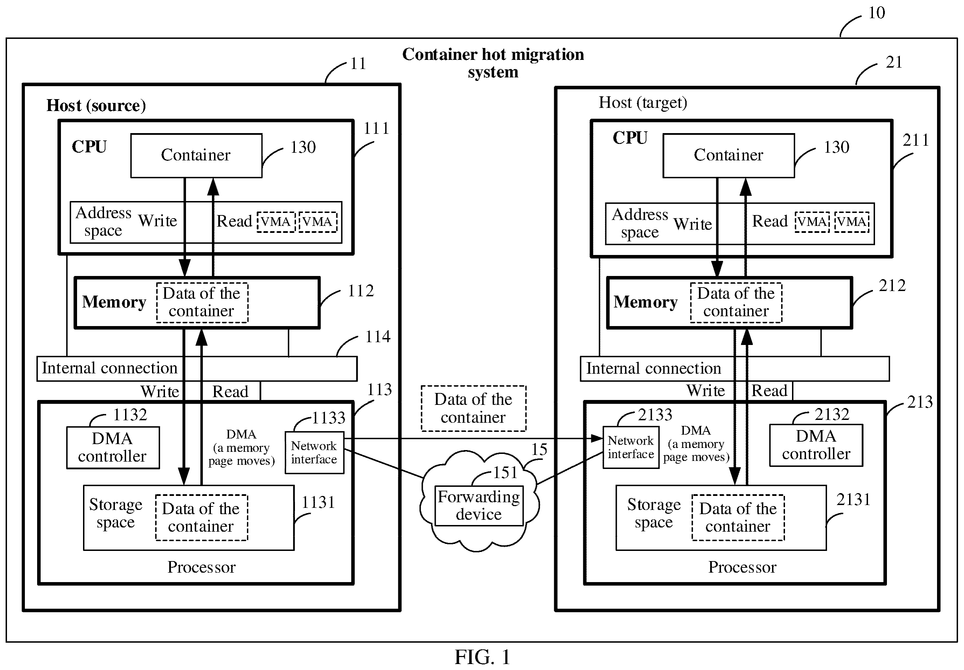

FIG. 1 is a diagram of an architecture of a container live migration system according to an embodiment of this application. The system 10 shown in FIG. 1 includes a host 11 and a host 21.

The host 11 includes a CPU 111, a memory 112, and a processor 113. The CPU 111 is configured to run a container 14. The memory 112 is configured to cache data that is read/written by the container 14.

The processor 113 is configured to support the host 11 in implementing live migration of the container 14. In some embodiments, the processor 113 replaces the CPU 111 to transmit the data of the container 14 in the memory 112 to the host 21, so that an operation of transmitting the data of the container 14 is offloaded from the CPU 111 to the processor 113. Therefore, resource consumption caused by the data transmission operation performed by the CPU 111 is reduced, impact on another service on the host 11 caused by excessive resources that are consumed by the CPU for the container live migration is reduced, and overall duration required for the live migration of the container 14 is shortened. In addition, the processor 113 and the CPU 111 may perform parallel processing. For example, when the CPU 111 runs the container 14, the processor 113 transmits, to the host 21, the data that has been read/written by the container 14, to improve overall live migration efficiency.

In some embodiments, the processor 113 includes storage space 1131 and a network interface 1133.

In some embodiments, the processor 113 is further configured to allocate cache space to the container 14 from the memory 112, so that data that needs to be read/written by the container 14 is cached by using the cache space, and a data read/write speed of the container 14 is increased.

In some embodiments, the processor 113 is further configured to allocate first storage space to the container 14 from the storage space 1131, so that the data of the container 14 is stored by using the first storage space. For example, the data of the container 14 is persistently stored by using the first storage space. This is equivalent to that the memory 112 is front-end storage of the container 14, and the first storage space is back-end storage of the container 14, to expand a storage capacity provided for the container 14.

The processor 113 is configured to exchange the data of the container 14 between the storage space 1131 and the memory 112 through direct memory access (Direct Memory Access, DMA), to bypass (bypass) the CPU of the host. In an example embodiment, the processor 113 is configured to access the memory 112 through DMA to obtain a memory page occupied by the container 14, copy the memory page of the container 14 to obtain an image of the memory page, and transmit the image of the memory page to the host 21 through the network interface 1133. Based on this implementation, the CPU 111 does not need to execute memory page copying and transmission tasks, so that live migration offloading is implemented, and resources consumed by the CPU are further saved.

Optionally, the processor 113 includes a DMA controller 1132, and reads/writes the data of the container 14 through DMA by using the DMA controller 1132.

The network interface 1133 uses any apparatus such as a transceiver, and is configured to communicate with the host 21 or a network 15. The network interface 1133 includes, for example, at least one of a wired network interface or a wireless network interface. The wired network interface is, for example, an ethernet interface. The ethernet interface is, for example, an optical interface, an electrical interface, or a combination thereof. The wireless network interface is, for example, a wireless local area network (wireless local area network, WLAN) interface, a cellular network interface, or a combination thereof.

Optionally, the processor 113 is a data processing unit (data processing unit, DPU). The DPU herein may alternatively be replaced with a processing chip such as a graphics processing unit (graphics processing unit, GPU) or an embedded neural-network processing unit (neural-network processing unit, NPU). Alternatively, the processor 113 is another integrated circuit configured to implement the solutions of this application. For example, the processor 113 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field programmable gate array, FPGA), generic array logic (generic array logic, GAL), or any combination thereof.

In some embodiments, the host 11 further includes an internal connection 114. The CPU 111, the memory 112, and the processor 113 are connected by using the internal connection 114. The internal connection 114 includes a path for transferring information, for example, the data of the container 14, between the foregoing components. Optionally, the internal connection 114 is a board or a bus.

Optionally, the processor 113 includes a host interface (not shown in FIG. 1), and the processor 113 communicates with the component in the host 11 through the host interface. For example, the host interface of the processor 113 is a PCI (Peripheral Component Interconnect, peripheral component interconnect) interface, and the internal connection 114 is a PCI bus. In other words, the processor 113 is interconnected to the PCI bus of the host through the PCI interface, to access the memory 112 of the host through the PCI bus. Alternatively, the host interface of the processor 113 is a peripheral component interconnect express (peripheral component interconnect express, PCIe) interface, and the internal connection 114 is a PCIe bus. In other words, the processor 113 is interconnected to the PCIe bus of the host through the PCIe interface, to access the memory 112 of the host through the PCIe bus.

In this embodiment of this application, an example in which the host 11 is a source host and the host 21 is a target host is used for description. The source host refers to a host on which a to-be-migrated container is located, and the target host refers to a host to which the container needs to be migrated.

The host 21 includes a CPU 211, a memory 212, and a processor 213. The processor 213 includes a DMA controller 2132, storage space 2131, and a network interface 2133. For details of the components in the host 21, refer to the descriptions of the host 11.

In some embodiments, the host 21 and the host 11 have resources of a same specification, and the resources include but are not limited to a CPU, a memory, a hard disk, a network configuration, and the like. For example, the CPU 211 and the CPU 111 have a same system architecture, and the memory 212 and the memory 112 have a same storage capacity.

In some other embodiments, a resource specification of the host 21 is greater than a resource specification of the host 11. For example, the CPU 211 has more processing cores than the CPU 111, the memory 212 has a larger storage capacity than the memory 112, and bandwidth of the host 21 is greater than bandwidth of the host 11. Therefore, after the live migration of the container 14, the host 21 runs the container and takes over a service of the container originally on the host 11, so that service processing performance can be improved.

In some embodiments, the processor 113 communicates with the processor 213 via the network 15. The network 15 is, for example, a network interconnected between chips, and is dedicated to transmitting data between the chips. The processor 113 is configured to transmit the data of the container to the host 21 via the network 15, to increase a speed of transmitting the data of the container between the hosts, and accelerate the container migration.

The network 15 includes but is not limited to a remote direct memory access (remote direct memory access, RDMA) network, an RDMA over converged ethernet (RDMA over converged ethernet, RoCE) network, an RoCEv2 network, a non-volatile memory express (non-volatile memory express, NVM Express or NVMe) network, a transmission control protocol (transmission control protocol, TCP) network, a user datagram protocol (User Datagram Protocol, UDP) network, a quick UDP internet connection (Quick UDP Internet Connection, QUIC), and the like. Optionally, the network 15 includes one or more forwarding devices, for example, a forwarding device 151 in FIG. 1. The forwarding device 151 includes but is not limited to a switch, a router, and the like.

In some embodiments, the host 11 is connected to a storage device 17, and the processor 113 is further configured to communicate with the storage device 17, and allocate persistent storage space to the container 130 from the storage device 17. The storage device 17 is, for example, a disk enclosure or a hard disk. For example, the storage device 17 is a solid-state drive (Solid-State Drive, SSD) or a hard disk drive (Hard Disk Drive, HDD). In the foregoing implementations, the data of the container not only can be stored by using the memory, but also can be stored by using the storage device connected to the host, thereby further expanding available storage space of the container.

In some embodiments, the host 21 is connected to a storage device 27, and the processor 2132 is further configured to communicate with the storage device 27, and allocate persistent storage space to the container 130 from the storage device 27. The storage device 27 is, for example, a disk enclosure or a hard disk. For example, the storage device 27 is an SSD or an HDD.

A scenario in which the hosts run one container shown in FIG. 1 is merely an example. In another example scenario, one CPU is configured to run two or more containers. In still another example scenario, a host includes a plurality of CPUs, and each CPU is configured to run at least one container. In a scenario in which one host runs a plurality of containers, when live migration needs to be performed on any one of the containers, a chip is configured to transmit data of the container to a target host of the container.

The following describes application scenarios of embodiments of this application by using examples.

Container live migration technologies provided in embodiments of this application may be applied to a plurality of scenarios, to migrate a container from a host to another host without interrupting a service running in the container or within an extremely short interruption time period, thereby reducing impact of container migration on the service, and making the service in the container unaware of a migration process as much as possible.

In some example scenarios, when a source host is faulty, or hardware of the source host needs to be replaced, or the hardware of the source host needs to be maintained, or application software or an operating system of the source host needs to be upgraded (upgraded) or patched (patched), a method provided in embodiments of this application is used, to migrate a container of the source host to a target host.

In some other example scenarios, to implement load balancing between different hosts, if it is detected that a source host is overloaded, a method provided in embodiments of this application is used, to migrate a container of the source host to a target host, thereby releasing resources consumed by the source host for running the container, and reducing load of the source host. Alternatively, if it is detected that load of a target host is excessively light, a method provided in embodiments of this application is used, to migrate a container of a source host to the target host, thereby improving resource utilization of the target host.

In some other example scenarios, to meet a service-level agreement (Service-Level Agreement, SLA) of a container service of a key tenant, a target host that can meet the SLA is determined from a computing node cluster, to migrate a container of a source host to the target host.

The following describes method processes in embodiments of this application by using examples.

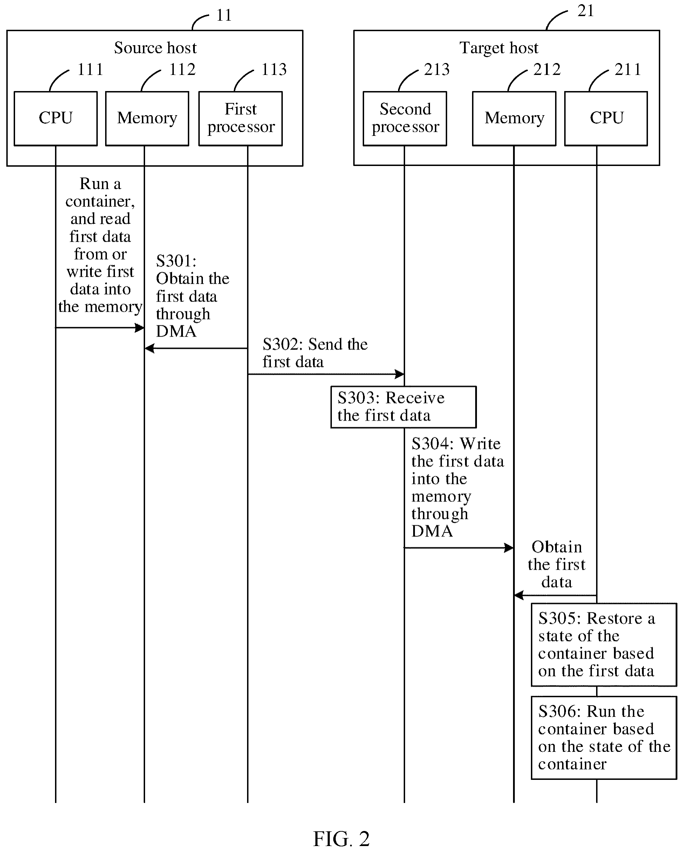

FIG. 2 is a flowchart of a container live migration method according to an embodiment of this application. A system architecture on which the method shown in FIG. 2 is based is shown in FIG. 1. The method shown in FIG. 2 is described by using a scenario in which a container is migrated from a host 11 to a host 21 as an example. In other words, a source host (that is, a host on which the container is located before the migration) is the host 11, and a target host (that is, a host on which the container is located after the migration) is the host 21.

The method shown in FIG. 2 is performed in many occasions. In some embodiments, a processor 113 performs the following step S301 in response to receiving a live migration instruction, to start a live migration process. The live migration instruction is used to instruct to migrate the container 130 to the host 21. For example, the live migration instruction is triggered based on an operation of an administrator, or is sent by a scheduler in a system, or is sent by a CPU 111. In some other embodiments, in response to detecting that the host 11 is faulty, or detecting that resource utilization of the host 11 is higher than a threshold, or detecting that resource utilization of the host 21 is lower than the threshold, a processor 113 performs the following step S301, to start a live migration process.

The method shown in FIG. 2 includes the following step S301 to step S306.

Step S301: The processor 113 obtains first data of the container 14 from a memory 112 through DMA.

The first data is to-be-migrated data of the container, and the first data includes but is not limited to file descriptor-related data, memory-related data, process-related data, a file system mount point, and network-related data. The file descriptor-related data includes but is not limited to a socket (socket) file, a character device, an event notification file descriptor, semaphore, and the like. The memory-related data includes but is not limited to a process virtual address stack, a shared file, an anonymous shared file, and the like. The process-related data includes but is not limited to a process parent-child relationship, thread information, register information, a process state, a signal queue, and the like. The file system mount point is, for example, a root file system, a control group (control group, cgroup), or a virtual file system. The network-related data includes a network device, a routing table, a firewall rule, or the like.

In a possible implementation, the processor 113 obtains a storage address of the first data in the memory 112 of the host 11, and the processor 113 accesses the memory 112 of the host 11 based on the storage address through DMA, to obtain the first data.

Step S302: The processor 113 sends the first data to the host 21.

In some embodiments, the processor 113 sends the first data to the host 21 via a network 15. Because the first data is transmitted by using a network interconnected between different processors, a transmission speed of the first data is increased.

In some embodiments, the processor 113 sends the first data to a memory 212 of the host 21 through RDMA, so that the first data can be transmitted to the memory of the target host without participation of a CPU 211 of the target host, thereby increasing the transmission speed of the first data.

In some embodiments, when live migration starts, the processor 113 moves the data in the memory 112 to storage space of the processor 113. Then, the processor 113 performs a dump (dump) operation based on the data in the memory 112, to obtain a file.

In some embodiments, when the processor 113 performs the dump operation, the CPU 111 continues to run the container, so that a container service is not interrupted in a migration process.

In some embodiments, a process of performing the dump operation includes: obtaining a process tree structure of a process of the container based on a process identifier (Process Identifier, pid) of the container; obtaining related information of all processes and threads of the container from a proc file system; intercepting the process by using ptrace and injecting a parasite (parasite) program; storing related information in process space by using the parasite program; and storing related information of remaining processes. Optionally, all data of the container is stored in a local img file of the host 11 in a google protobuf format.

Step S303: A processor 213 receives the first data of the container 14 sent by the host 21.

In some embodiments, the processor 213 receives the first data via the network 15.

Step S304: The processor 213 writes the first data into the memory 212 through DMA.

Step S305: The CPU 211 restores a state of the container 14 based on the first data.

Step S306: The CPU 211 runs the container 14 based on the state of the container 14.

According to the method provided in this embodiment, a processor is used to perform a container live migration process, and the processor transmits, to a target host through DMA, data of a container stored in a source host, so that a CPU does not need to perform a data transmission operation in the live migration process, thereby reducing consumption of the CPU. For example, the processor is used to copy a memory page through DMA, so that operations of copying the memory page and transmitting the memory page are offloaded to a smart card, thereby reducing consumption of the CPU of the host. Therefore, operation and maintenance and upgrade duration of the existing container is greatly shortened, customer experience is greatly improved, the container live migration process is greatly accelerated, efficiency of the CPU of the host is improved, and another existing service on the host is not affected.

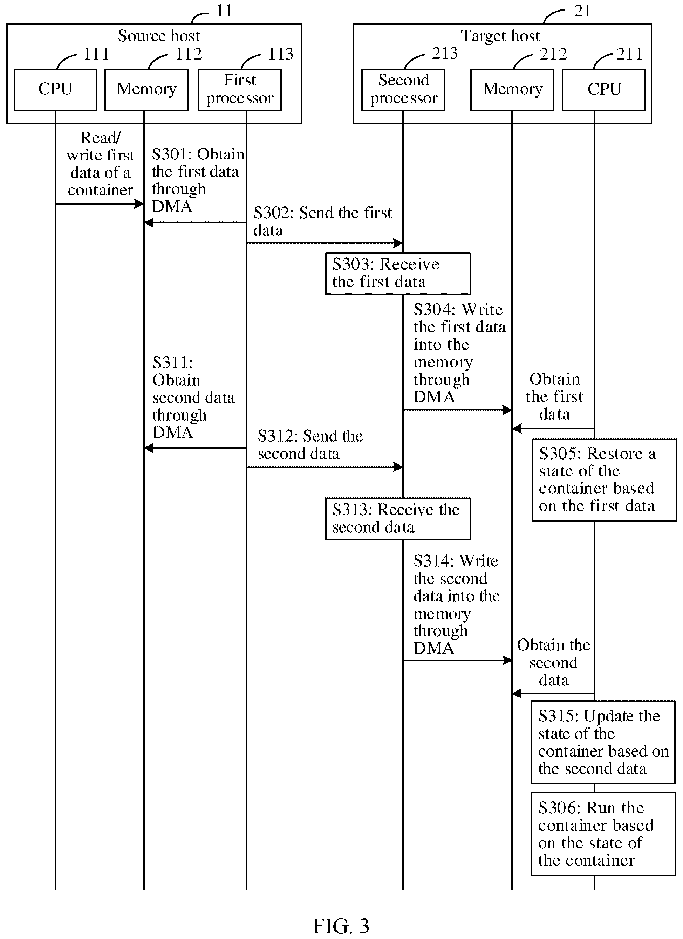

Optionally, because a service running in the container is not interrupted in the container live migration process, in the service in the container, a memory page in the memory 112 is still read/written, data on the memory page is modified, and dirty page data is generated. For the dirty page data, the processor 113 may transmit the dirty page data to the host 21 by performing iterative copying for one or more times. The following uses an example in an embodiment in FIG. 3 for description. Based on all the steps included in the embodiment in FIG. 2, the embodiment in FIG. 3 further includes the following step S311 to step S315.

Step S311: The processor 113 obtains, from the memory 112 through DMA, second data generated in a process of transmitting the first data.

The second data is data modified by the container in the first data. In some embodiments, the processor 113 detects whether the data in the memory 112 changes, and determines the second data based on changed data in the memory 112.

In some embodiments, the second data is a memory page modified by the container in all memory pages included in the first data. For example, the first data is n memory pages. In a process of transmitting the n memory pages from the host 11 to the host 21, the container 14 modifies m memory pages in the n memory pages. In this case, the processor 113 determines the m memory pages, and transmits the m memory pages to the host 21. In a possible implementation, the processor 113 queries a memory dirty page bitmap, and determines m to-be-copied memory pages based on the memory dirty page bitmap.

In some embodiments, the second data is modified data on a memory page modified by the container in all memory pages included in the first data. In other words, a modified part on the memory page is transmitted, while the entire memory page does not need to be transmitted. For example, the first data is n memory pages. For each of the n memory pages, the processor 113 performs an exclusive OR operation based on data on the current memory page and the memory page before modification, to obtain modified data on the memory page, and transmits the modified data on the memory page to the host 21.

Step S312: The processor 113 sends the second data to the host 21.

Step S313: The processor 213 receives the second data sent by the host 21.

Step S314: The processor 213 writes the second data into the memory 212 through DMA.

Step S315: The CPU 211 updates the state of the container based on the second data.

Step S311 to step S315 may be performed for zero, one, or more times. In a possible implementation, the processor 113 performs an iterative dump operation on the container, sends, to the memory 212 of the host 21 via the network between the processor 113 and the processor 213, the file obtained through the dump operation, and continuously performs iteration until memory data converges. The host 11 performs the dump operation for the last time, to send the data of the container to the socket file of the host 21. After the operation is completed, the host 11 stops running the container. The host 21 executes a checkpoint or restore in userspace (checkpoint/restore in userspace, criu restore), and receives the data (including process state data) obtained through the dump operation performed for the last time. Each process in a process tree completes state refreshing of the process, refreshes a memory page, and completes last startup of a memory mapping process. The criu restore is used to freeze (freeze) a running container, create checkpoints based on all files in the container, restore, based on the checkpoints, a state of the container when the container is frozen, and continue to run the container.

For example, that the memory data converges means that a difference between data of a container stored in the target host and data of a container stored in the source host is less than a threshold. For example, the processor 113 determines, based on a transmission rate, a dirty page rate, or a quantity of remaining dirty pages, that the memory data converges. For another example, the processor 113 determines, based on that a quantity of times of iterative transmission exceeds a maximum quantity of times of iteration, that the memory data converges.

In the foregoing implementations, incremental iterative transmission of data is implemented. Incremental processing is performed on the memory data of the container, and then the data of the container is transmitted to a remote host through iteration based on the network between the processors, thereby accelerating the live migration. In addition, the operation and maintenance and upgrade duration of the existing container is greatly shortened, the customer experience is greatly improved, the container live migration process is greatly accelerated, and a quantity of dirty memory pages in the live migration process is reduced.

The foregoing describes a process of container live migration offloading by using the embodiment in FIG. 2. The following describes a process of creation of the container by using an example with reference to the architecture of the system shown in FIG. 1.

In some embodiments, in response to creation of a container 14, a CPU 111 applies for one or more segments of continuous physical memories from a memory 112, where the applied memory is configured to cache data that is read/written by the container 14, and the CPU 111 uses one or more VMAs to represent the applied memory. In addition, a processor 113 allocates first storage space to the container 14 from storage space 1131, where the first storage space is used as persistent space, and is used to exchange data of the container 14 with the memory. A process of exchanging the data between the memory and the first storage space is based on a DMA operation, and bypasses the CPU 111. In addition, the processor 113 establishes a correspondence between the applied physical memory and the first storage space.

The following describes an implementation of a data read/write process of a container by using an example with reference to the architecture of the system shown in FIG. 1. The following read/write process of the container may be applied to a source host. Correspondingly, the following processor is the processor 112 in FIG. 1. The following read/write process of the container may also be applied to the target host. Correspondingly, the following processor is the processor 213 in FIG. 1.

When a container in a host is in a running process, a CPU directly accessing storage space in a processor may cause a large access latency. Based on this, the source host or the target host accesses a physical memory as a cache region, used to accelerate read/write access.

For a write operation scenario, in some embodiments, the CPU receives a data storage request of the container, and the CPU writes, into a memory, data that is requested to be stored by the container. Optionally, the processor detects an available capacity of the memory, and in response to detecting that the available capacity of the memory reaches a threshold, the processor migrates the data of the container in the memory to first storage space in the processor through DMA, so that storage space originally occupied by the data of the container in the memory can be released, and memory resources are saved.

For a read operation scenario, a process of reading third data is used as an example. In some embodiments, the processor receives a data obtaining request from the container, where the data obtaining request indicates to obtain the third data; and the processor obtains the third data and writes the third data into the memory through DMA.

In a possible implementation, the processor searches the memory based on an address of the third data, and if the address of the third data hits the memory, the processor obtains the third data from the memory, and returns the obtained third data to the container. If the address of the third data does not hit the memory, the processor searches, based on the address of the third data, the first storage space of the memory of the processor; and if the address of the third data hits the first storage space, the processor obtains the third data from the first storage space, and returns the obtained third data to the container.

The following describes a process of processing a page fault (page fault) in a read/write process of a container by using an example.

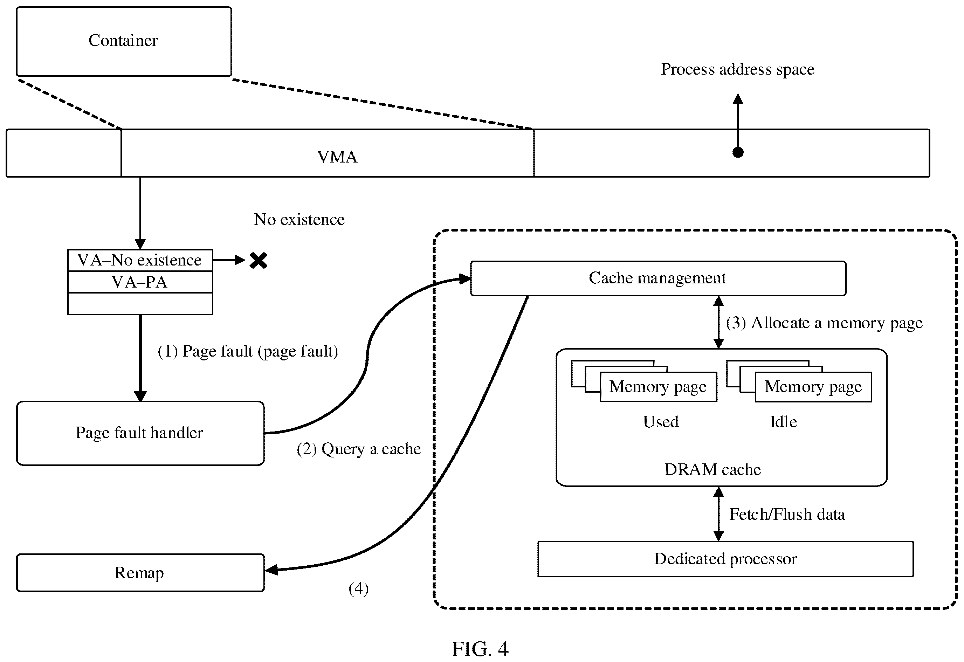

FIG. 4 is a flowchart of processing a page fault according to an embodiment of this application. As shown in FIG. 4, the process of processing the page fault includes the following step (1) to step (4).

Step (1) and step (2): A page fault handler (page fault handler) notifies a user mode process to perform page fault processing.

Step (3): A memory management system allocates a memory page from a DRAM managed by the memory management system.

Step (4): The memory management system invokes a remap (remap) interface to complete mapping of the memory page.

According to the foregoing processing process, in cooperation with a DMA operation, flush or fetch between storage space of processors is cached in the DRAM, to bypass a kernel (bypass kernel), thereby reducing consumption of a CPU of a host. In addition, during live migration, only a dirty page in a dynamic random access memory (dynamic random access memory, DRAM) cache (cache) needs to be migrated, and the dirty page is first flushed to the processor, and then the migration is accelerated by using a private network between the processors.

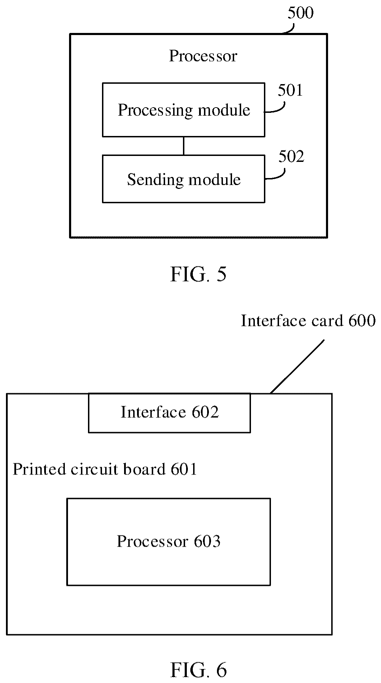

FIG. 5 is a diagram of a structure of a processor 500 according to an embodiment of this application. Optionally, with reference to FIG. 1, the processor 500 shown in FIG. 5 is the processor 113 in FIG. 1. Optionally, with reference to FIG. 2, the processor 500 shown in FIG. 5 is the processor 113 in FIG. 2.

The processor 500 shown in FIG. 5 includes a processing module 501 and a sending module 502.

The processing module 501 is configured to obtain first data of a to-be-migrated container from a memory of a first host through DMA; and
the sending module 502 is configured to send the first data to a second host.

In some implementations, the processor 500 is a first processor, and the sending module 502 is configured to send the first data to a second processor 500 in the second host via a first network, where the first network is a communication network between the first processor 500 and the second processor 500.

In some implementations, the sending module 502 is configured to send the first data to a memory of the second host through remote direct memory access RDMA.

In some implementations, the processing module 501 is further configured to obtain second data of the container from the memory of the first host through DMA, where the second data is data modified by the container in the memory of the first host in a process in which the first data is transmitted to the second host; and
the sending module 502 is further configured to send, by the first processor 500, the second data to the second host.

In some implementations, the processing module 501 is further configured to: in response to creation of the container, allocate first storage space to the container from a memory included in the first processor 500, where the first storage space is used to store the data of the container.

In some implementations, the processing module 501 is further configured to: in response to an available capacity of the memory of the first host reaching a threshold, migrate, through DMA, the data of the container in the memory of the first host to the first storage space included in the first processor 500.

In some implementations, the processor 500 further includes a receiving module, configured to receive, by the first processor 500, a data obtaining request from the container, where the data obtaining request indicates to obtain third data.

The processing module 501 is further configured to obtain the third data, and write the third data into the memory of the first host through DMA.

In some implementations, the processing module 501 is configured to obtain a storage address of the first data in the memory of the first host, and access the memory of the first host based on the storage address through DMA, to obtain the first data.

In some implementations, the processor 500 is a data processing unit DPU.

In some implementations, the processing module 501 and the sending module 502 in the processor 500 are implemented by using software, and the processing module 501 and the sending module 502 in the processor 500 are program modules. In some other embodiments, the processing module 501 and the sending module 502 in the processor 500 are implemented by using hardware or firmware.

When the software is used for implementation, for example, the processing module 501 and the sending module 502 are implemented by using a software functional unit generated after at least one processor 113 in FIG. 1 reads program code stored in storage space 1131.

When the hardware is used for implementation, for example, the processing module 501 and the sending module 502 in FIG. 5 are separately implemented by using different hardware in the processor 113 in FIG. 1, for example, the processing module 501 is implemented by using a part of processing resources (for example, one core or two cores in a multi-core processor) in at least one processor 113 in FIG. 1, or is implemented by using a programmable device such as a field programmable gate array (field programmable gate array, FPGA for short) or a coprocessor. The sending module 502 is implemented by using the network interface 1133 in FIG. 1.

FIG. 6 is a diagram of an interface card according to an embodiment of this application. The interface card 600 shown in FIG. 6 is configured to be coupled to a host. The interface card 600 includes a printed circuit board 601, an interface 602, and a processor 603. The interface card 600 communicates with the host through the interface 602. The interface 602 and the processor 603 are located on the printed circuit board 601.

Optionally, with reference to FIG. 1, the interface card 600 shown in FIG. 6 is coupled to a host 11. For example, the interface card 600 is connected to an internal connection 114 (for example, a bus) of the host 11. The processor 603 in the interface card 600 is a dedicated chip 113 in FIG. 1.

Optionally, with reference to FIG. 2 or FIG. 3, the processor 603 in the interface card 600 shown in FIG. 6 is configured to perform S301 and S302 in FIG. 2 or FIG. 3.

Embodiments of this application further provide a computer-readable storage medium. The computer-readable storage medium may be any usable medium that can be stored by a computing device, or a data storage device such as a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the foregoing container live migration method.

Embodiments of this application further provide a computer program product. The computer program product includes one or more computer instructions. When the computer instructions are loaded and executed on a computing device, all or some of the processes or functions according to embodiments of this application are generated.

The computer instructions may be stored in a computer-readable storage medium or may be transmitted from a computer-readable storage medium to another computer-readable storage medium. For example, the computer instructions may be transmitted from a website, a computer, or a data center to another website, another computer, or another data center in a wired (for example, a coaxial cable, an optical fiber, or a digital subscriber line (DSL)) or wireless (for example, infrared, radio, or microwave) manner.

The computer program product may be a software installation package. When any one of the foregoing container live migration methods needs to be used, the computer program product may be downloaded, and the computer program product may be executed on a computing device.

It should be noted that embodiments in this specification are all described in a progressive manner. Descriptions of each of embodiments focus on differences from other embodiments, and reference may be to each other for the same or similar parts among embodiments. For the system or apparatus disclosed in embodiments, since the system or apparatus corresponds to the method disclosed in embodiments, the descriptions are simple. The relevant part may be described with reference to the method section.

It should be understood that, in this application, "at least one (item)" means one or more and "a plurality of" means two or more than two. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items" or a similar expression means any combination of these items, including a single item or any combination of a plurality of items. At least one of a, b, or c may represent a, b, c, "a and b", "a and c", "b and c", or "a, b, and c", where a, b, and c may be singular or plural.

It should be further noted that in this specification, relational terms such as "first" and "second" are only used to distinguish one entity or operation from another entity or operation, and do not necessarily require or imply that any actual relationship or sequence exists between these entities or operations. In addition, the terms "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. If no more limitations are made, an element limited by "include a/an..." does not exclude other same elements existing in the process, the method, the article, or the device which includes the element.

In combination with embodiments disclosed in this specification, steps of the described method or algorithm may be directly implemented by using hardware, a software module executed by a processor, or a combination thereof. The software module may be placed in a random access memory (RAM), a memory, a read-only memory (ROM), an electrically programmable ROM, an electrically erasable programmable ROM, a register, a hard disk, a removable magnetic disk, a CD-ROM, or any other form of storage medium well-known in the technical field.

The foregoing descriptions of the disclosed embodiments enable a person skilled in the art to implement or use this application. It is apparent to a person skilled in the art to make various changes to these embodiments. The general concept defined in this specification may be implemented in other embodiments without departing from the spirit or scope of this application. Therefore, this application is not limited to these embodiments shown in this specification, but needs to conform to the broadest scope consistent with the principles and novel features disclosed in this specification.

## Claims

1. A container live migration method, wherein the method comprises:
obtaining, by a first processor, first data of a to-be-migrated container from a memory of a first host through direct memory access DMA, wherein the first host comprises the memory, a central processing unit CPU, and the first processor, and the container runs on the first host; and
sending, by the first processor, the first data to a second host.

2. The method according to claim 1, wherein sending, by the first processor, the first data to the second host comprises:
sending, by the first processor, the first data to a second processor in the second host via a first network, wherein the first network is a communication network between the first processor and the second processor.

3. The method according to claim 1, wherein the first processor is further configured to communicate with a storage device connected to the first host, and allocate persistent storage space to the container from the storage device.

4. The method according to claim 1, wherein sending, by the first processor, the first data to the second host comprises:
sending, by the first processor, the first data to a memory of the second host through remote direct memory access RDMA.

5. The method according to any one of claims 1 to 4, wherein the method further comprises:
obtaining, by the first processor, second data of the container from the memory of the first host through DMA, wherein the second data is data modified by the container in the memory of the first host in a process in which the first data is transmitted to the second host; and
sending, by the first processor, the second data to the second host.

6. The method according to any one of claims 1 to 5, wherein the method further comprises:
in response to creation of the container, allocating, by the first processor, first storage space to the container from storage space comprised in the first processor, wherein the first storage space is used to store the data of the container.

7. The method according to any one of claims 1 to 6, wherein the method further comprises:
in response to an available capacity of the memory of the first host reaching a threshold, migrating, by the first processor through DMA, the data of the container in the memory of the first host to the first storage space comprised in the first processor.

8. The method according to any one of claims 1 to 7, wherein the method further comprises:
receiving, by the first processor, a data obtaining request from the container, wherein the data obtaining request indicates to obtain third data; and
obtaining, by the first processor, the third data, and writing the third data into the memory of the first host through DMA.

9. The method according to any one of claims 1 to 8, wherein obtaining, by the first processor, the first data of the to-be-migrated container from the memory of the first host through direct memory access DMA comprises:
obtaining, by the first processor, a storage address of the first data in the memory of the first host; and
accessing, by the first processor, the memory of the first host based on the storage address through DMA, to obtain the first data.

10. The method according to any one of claims 1 to 9, wherein the first processor is a data processing unit DPU.

11. A container live migration method, applied to a first host, wherein the first host comprises a central processing unit CPU, a memory, and a first processor, and the method comprises:
receiving, by the first processor, first data of a container that is sent by a second host;
writing, by the first processor, the first data into the memory of the first host through direct memory access DMA;
obtaining, by the CPU, the first data from the memory of the first host; and
restoring, by the CPU, a state of the container based on the first data.

12. The method according to claim 11, wherein the second host comprises a second processor, and receiving, by the first processor, the first data of the container that is sent by the second host comprises:
receiving, by the first processor via a first network, the first data of the container that is sent by the second host, wherein the first network is a communication network between the first processor and the second processor.

13. The method according to claim 11, wherein the first processor is further configured to communicate with a storage device connected to the first host, and allocate persistent storage space to the container from the storage device.

14. The method according to any one of claims 11 to 13, wherein after receiving, by the first processor, the first data of the container that is sent by the second host, the method further comprises:
receiving, by the first processor, second data of the container that is sent by the second host, wherein the second data is data modified by the container in a memory of the second host in a process in which the first data is transmitted to the first host;
writing, by the first processor, the second data into the memory of the first host through DMA;
obtaining, by the CPU, the second data from the memory of the first host; and
updating, by the CPU, the state of the container based on the second data.

15. The method according to any one of claims 11 to 14, wherein the first processor is a data processing unit DPU.

16. A processor, wherein the processor is a first processor and comprises:
a processing module, configured to obtain first data of a to-be-migrated container from a memory of a first host through direct memory access DMA, wherein the first host comprises the memory, a central processing unit CPU, and the first processor, and the container runs on the first host; and
a sending module, configured to send the first data to a second host.

17. The processor according to claim 16, wherein the sending module is configured to send the first data to a second processor in the second host via a first network, wherein the first network is a communication network between the first processor and the second processor.

18. The processor according to claim 16, wherein the processing module is further configured to communicate with a storage device connected to the first host, and allocate persistent storage space to the container from the storage device.

19. The processor according to claim 16, wherein the sending module is configured to send the first data to a memory of the second host through remote direct memory access RDMA.

20. The processor according to any one of claims 16 to 19, wherein the processing module is further configured to obtain second data of the container from the memory of the first host through DMA, wherein the second data is data modified by the container in the memory of the first host in a process in which the first data is transmitted to the second host; and
the sending module is further configured to send the second data to the second host.

21. The processor according to any one of claims 16 to 20, wherein the processing module is further configured to: in response to creation of the container, allocate, by the first processor, first storage space to the container from storage space comprised in the first processor, wherein the first storage space is used to store the data of the container.

22. The processor according to any one of claims 16 to 21, wherein the processing module is further configured to: in response to an available capacity of the memory of the first host reaching a threshold, migrate, through DMA, the data of the container in the memory of the first host to the first storage space comprised in the first processor.

23. The processor according to any one of claims 16 to 22, wherein the processor further comprises a receiving module, configured to receive a data obtaining request from the container, wherein the data obtaining request indicates to obtain third data; and
the processing module is further configured to obtain the third data, and write the third data into the memory of the first host through DMA.

24. The processor according to any one of claims 16 to 23, wherein
the processing module is configured to obtain a storage address of the first data in the memory of the first host, and access the memory of the first host based on the storage address through DMA, to obtain the first data.

25. The processor according to any one of claims 16 to 24, wherein the processor is a data processing unit DPU.

26. A host, wherein the host is a first host, and the first host comprises a central processing unit CPU, a memory, and a first processor;
the first processor is configured to receive first data of a container that is sent by a second host;
the first processor is further configured to write the first data into the memory of the first host through direct memory access DMA;
the CPU is configured to obtain the first data from the memory of the first host; and
the CPU is further configured to restore a state of the container based on the first data.

27. The host according to claim 26, wherein the second host comprises a second processor, the first processor is configured to receive, via a first network, the first data of the container that is sent by the second host, wherein the first network is a communication network between the first processor and the second processor.

28. The host according to claim 26, wherein the first processor is further configured to communicate with a storage device connected to the first host, and allocate persistent storage space to the container from the storage device.

29. The host according to claim 26, wherein
the first processor is further configured to receive second data of the container that is sent by the second host, wherein the second data is data modified by the container in a memory of the second host in a process in which the first data is transmitted to the first host; and write the second data into the memory of the first host through DMA; and
the CPU is further configured to obtain the second data from the memory of the first host, and update the state of the container based on the second data.

30. The host according to any one of claims 26 to 29, wherein the first processor is a data processing unit DPU.

31. A chip, comprising a processor and a network interface, wherein
the processor is configured to obtain first data of a to-be-migrated container from a memory of a first host through direct memory access DMA; and
the network interface is configured to send the first data to a second host.

32. An interface card, comprising a printed circuit board, an interface, and a processor, wherein the interface card communicates with a first host through the interface, the interface and the processor are located on the printed circuit board, and the processor is configured to obtain first data of a to-be-migrated container from a memory of the first host through direct memory access DMA; and send the first data to a second host.
